# EUROPEAN PATENT APPLICATION

(11) **EP 1 331 232 A1**
(43) Date of publication of application: **30.07.2003**
(21) Application number: 02075333.1
(22) Date of filing: 28.01.2002
(51) Int. Cl.: C08F 222/06, C08F 216/18, C08F 8/12, C08F 8/14, B01J 19/24, B01J 19/18

(54) **Process for the preparation of a copolymer of maleic anhydride and an alkyl vinyl ether, copolymers of maleic anhydride and an alkyl vinyl ether and an apparatus**

(71) Applicant: DSM N.V., 6411 TE Heerlen (NL)
(72) Inventor: van Benthem, Rudolfus Antonius Theodorus Maria, 6141 BR Limbricht (NL); Friederichs, Joseph Petronella, 6019 CC Wessem (NL); Moreau, Dominique Jean Joseph Sophie, 6132 BD Sittard (NL)
(74) Representative: Krijgsman, Willem

(57) **Abstract**

Process for the preparation of a copolymer of maleic anhydride and an alkyl vinyl ether, comprising the steps of supplying maleic anhydride and the alkyl vinyl ether and an initiator, together forming a feed flow, through an inlet to a reactor wherein maleic anhydride and the alkyl vinyl ether react to a copolymer of maleic anhydride an alkyl vinyl ether thereby forming a reaction mixture with the maleic anhydride, the alkyl vinyl ether and the initiator characterized in that the process is a continuous process and the reactor is a loop reactor wherein the reaction mixture is internally circulated, whereby this reaction mixture arrives at the inlet before the maleic anhydride and alkyl vinyl ether have completely reacted while a remainder of initiator is still present.

The invention further relates to copolymer of maleic anhydride and alkyl vinyl ether, including hydrolyzed or alcoholized copolymers, characterized in that a molecular weight distribution, expressed as Mw/Mn, is less than 2.

The invention also relates to an apparatus for conducting the process of the invention.

## Description

The present invention relates to a process for the preparation of a copolymer of maleic anhydride and an alkyl vinyl ether, comprising the steps of supplying maleic anhydride and the alkyl vinyl ether and an initiator, together forming a feed flow, through an inlet to a reactor wherein maleic anhydride and the alkyl vinyl ether react to a copolymer of maleic anhydride and an alkyl vinyl ether which forms a reaction mixture with the maleic anhydride, the alkyl vinyl ether and the initiator.

The invention also relates to copolymers of maleic anhydride and an alkyl vinylether and to an apparatus for conducting the process of the invention.

A process for the preparation of a copolymer of maleic anhydride and an alkyl vinyl ether is known from EP-A-0919577. In this publication, a semi-batch process is described in which three feeds, being maleic anhydride in a solvent, an alkyl vinyl ether, and a radical initiator in a solvent, are dosed gradually to a pre-charged reactor containing a pre-polymerized copolymer consisting of the same monomers in a solvent. The example reads to a process where a reactor is pre-fed with an acetonic solution of a maleic anhydride/methyl vinyl ether copolymer, maleic anhydride and methyl vinyl ether to which, upon heating, is fed an acetonic solution of maleic anhydride, methyl vinyl ether and an acetonic solution of tert.-butylperneodecanoate. A copolymer with a molecular weight of 2,000,000 g/mol is obtained.

A disadvantage of the process as described in EP-A-0919577 is the fact that the reactor has to be precharged with a prepolymerised copolymer in order to prevent a run-away of the reaction.

The object of the invention therefore is to provide a process that exhibits a lower risk of a run away reaction, without the need of precharging the reactor with prepolymerised copolymer.

This object is achieved by the process of the invention, in that the process is a continuous process and the reactor is a loop reactor wherein the reaction mixture is internally circulated, whereby this reaction mixture arrives again at the inlet before the maleic anhydride and alkyl vinyl ether have completely reacted and while a remainder of initiator is still present.

With the process according to the invention there is a lower risk of a run away reaction, without the need of precharging the reactor with prepolymerised copolymer.

A further advantage of this process is that the temperature in the process can be better controlled and also that the process can be operated at higher temperatures than in the known batch proces in order to further reduce the production time. Another advantage of using a loop reactor is that the continuous production of the desired copolymers is less time consuming, especially when compared to the same reactor volume in a batch process, and can be operated more efficiently in an industrial environment. This makes the process of the invention more cost effective.

The preparation of a copolymer of maleic anhydride, MA and alkyl vinyl ether, AVE, hereinafter referred to as a copolymerization, is generally performed with radicals through a radical reaction. The radicals are formed by an initiator.

In the process of the invention MA, and AVE, which are both referred to as monomers, an initiator, I, and an optional diluent, solvent or solvent mixture are supplied through an inlet to a reactor whereby MA and AVE react to a copolymer of MA and AVE. The copolymer and MA, AVE, I and optional additives form a reaction mixture.

The process of the invention is a continuous process whereby the feed flow of MA, AVE and I, including other optional additives as e.g. a solvent, is continuously added through an inlet to the reactor and whereby continuously a part of the reaction mixture leaves the reactor. When the process is run under stationary conditions the flow of the part of the reaction mixture which is leaving the reactor equals the feed flow.

In the known processes for the copolymerization of MA and AVE, which are carried out in a batch process, use is nowadays mainly made of a suspension process or a solution process. The continuous process of the invention can be carried out in solution, in which case also a solvent or a solvent mixture is present in the reaction mixture, or in suspension, in which case at least one diluent is present in the reaction mixture. A suspension process generally yields copolymer powder or pellets while a solution process yields a copolymer solution.

The reactor is a loop reactor in which the reaction mixture is internally circulated in such a way that at the time the reaction mixture arrives at the inlet, where it is contacted with fresh supplied MA, AVE and I, it is not yet completely converted. This means that the MA and AVE have not yet completely reacted and that a remainder of initiator is still present.

In the process of the invention a loop reactor of the commonly known reactor types with an inlet and an exit and with some kind of internal circulation in a loop can be applied. Normally this type of reactor is completely filled with liquid. Preferably a loop reactor with two separate, interconnected, jacketed reactors is used, whereby the loop is formed by connecting the exit of a first reactor with a tube to an inlet of a second reactor from which a tube connects the exit of the second reactor with the inlet of the first reactor. The separate jacketed reactors comprise mono or multi parallel tubes, whereby a circulation pump is fitted in the loop. Another preferred loop reactor is a stirred tank reactor with an internal draft tube . The internal draft tube creates an annular part in the reactor and in the annular part a helix type mixer, hereinafter referred to as helicon mixer, is placed.

In particular for a suspension process a loop reactor with two separate jacketed reactors and a circulation pump is preferred. For a solution process this loop reactor concept can also be applied but a stirred tank reactor with external cooling of the feed flows is preferred since this reactor is less sensitive to deposition of copolymer from the solution.

In the process of the invention the monomers MA and AVE are used. The MA is solid at room temperature and melts at 54 °C. The MA can be fed to the reactor as a melt or in a solutionin e.g. the AVE. Suitable alkyl vinyl ethers for the process of the invention include methyl vinyl ether, ethyl vinyl ether, n-propyl vinyl ether, isopropyl vinyl ether, butyl vinyl ether, isobutyl vinyl ether, tert-butyl vinyl ether, pentyl vinyl ether, amyl vinyl ether, isoamyl vinyl ether, hexyl vinyl ether, n-octyl vinyl ether, 2-ethyl-hexyl vinyl ether, decyl vinyl ether, dodecyl vinyl ether, 2,3-dihydrofuran. Preferably the AVE is a C1-C4 alkyl vinyl ether. Copolymers based on C1-C4 alkyl vinyl ethers are commercially the most interesting because of their good solubility in water. Most preferred is methyl vinyl ether, because it renders a copolymer with MA with the best solubility in water.

As initiator in the process of the invention, the usual radical initiators known in the art for copolymerization of MA and AVE are applicable e.g. azo compounds, peroxy-ester, acyl peroxide and alkyl peroxide compounds. Suitable initiators include for example 2,2'-azobis(isobutyronitril), 2,2'-azobis(2,4-dimethylvaleronitril), 2,2'-azobis(4-methoxy-2,4-dimethylvaleronitril), cumyl peroxyneodecanoate (Trigonox® 99, AKZO-Nobel), tert-butyl peroxyneodecanoate, tert-amyl peroxyneodecanoate, tert-butyl peroxyneodecanoate (Trigonox® 23, AKZO-Nobel), tert-butyl peroxyisononaoate, tert-butyl peroxy-3,5,5-trimethylhexanoate, 2,4,4-trimetylpentyl peroxy-2-neodecanoate (Trigonox® 151, AKZO-Nobel), dilauryl peroxide, dioctanoyl peroxide, bis(4-tert-butyl-cyclohexyl) peroxydicarbonate (Perkadox® 16, AKZO-Nobel).

The process of the present invention can also be conducted at temperatures above 105 °C, which is seen as an upper temperature for the known batch wise processes. In the process of the invention it therefore now is also possible to use azo compounds, peroxy-ester, acyl peroxide and alkyl peroxide compounds with higher decomposition temperatures . The one skilled in the art will be able to select suitable initiators from these classes with the desired half life time at the reaction temperature. Examples include dibenzoyl peroxide (Lucidol®, AKZO-Nobel), tert-butyl peroxy-2-ethylhexanoate (Trigonox® 21, AKZO-Nobel), dicumyl peroxide (Perkadox® BC, AKZO-Nobel), di-tert-amyl peroxide (Trigonox® 201, AKZO-Nobel), tert-butyl peroxybenzoate (Trigonox® C, AKZO-Nobel), tert-butyl peroxy-2-ethyl-hexylcarbonate (Trigonox® 117, AKZO-Nobel).

It is also possible to use a mixture of two initiators, one with a high decomposition temperature under the given reaction conditions, e.g. higher than 105°C and one with a lower decomposition temperature. The advantage of such a mixture of two initiators is that it is universally applicable at several reaction temperatures. Generally the molar ratio of MA/initiator is between 100 and 10.000, preferably between 500 and 5000 and more preferably between 750 and 1250. Advantages thereof are a good balance between molecular weight and conversion.

Generally the feed flow comprises a molar ratio of AVE to MA of between 1.05 and 5. The ratio is higher than 1.05 and preferably higher than 1.1 in order to obtain a copolymer product with a low concentration of unreacted MA. In a suspension process the AVE can also serve as a diluent in which case a molar ratio higher than 2 may be chosen. Preferably the molar ratio of alkyl vinyl ether to MA is less than 5. Higher ratios make the process of the invention less cost-effective because a large amount of AVE has to be removed from the copolymer obtained.

The process according to the invention is generally carried out at a temperature between 50 °C and 180°C. At temperatures below 50 °C, the copolymerization becomes too slow. Above180 °C degradation reactions occur more frequently. For a better balance between copolymerization and degradation reactions the reactor temperature is preferably chosen between 70 and 150 °C, and more preferably between 90 and 130 °C.

In the process of the invention the temperature of the reactor increases due to the exothermic nature of the copolymerisation reaction. Cooling therefore is preferred and the amount of cooling is chosen such that the cooling compensates for the released heat of reaction. Cooling can be performed directly by cooling the reactor content, through e.g. a jacket or a coil, or indirectly by cooling of the feed flow to the reactor. Preferably the feed flow is cooled to below ambient temperature before being introduced into the reactor because this gives a more efficient way of cooling the reactor than through a jacket or a coil. The process can be carried out at atmospheric pressure. However if the process is carried out at a temperature higher than the boiling point of one of the components in the reaction mixture, the process is preferably carried out under pressure. Absolute pressures of 1 to 20 bar can be used in the process. An inert gas can be used for obtaining the desired pressure level.

In the process of the invention a remainder of initiator is present at the time that the internally circulated reaction mixture arrives at the inlet. This means that the fraction of initiator which has decomposed into radicals after completing one circulation through the loop reactor, starting from the inlet, is less than 100%. The fraction of decomposed initiator is determined by the half-life time of the initiator at the temperature in the loop reactor and the time required for the reaction mixture to complete one circulation through the loop reactor, hereinafter referred to as circulation time. The fraction of decomposed initiator can be defined through the ratio of the circulation time in the loop reactor to the half-life time of the initiator. When the ratio of the circulation time in the loop reactor to the half-life time of the initiator is 1, the fraction of initiator, which has decomposed upon completion of one circulation in the loop reactor is 50%. When the ratio of the circulation time in the loop reactor to the half-life time of the initiator is 3, the fraction of initiator, which has decomposed upon completion of one circulation in the loop reactor is 87.5%,. Preferably, the ratio of the circulation time of the reaction mixture to the half life time of the initiator is less than 3, more preferably less than 1. Preferably this ratio is at least 0.05 in order to still obtain a reasonable molecular weight distribution.

The amount and type of initiator strongly determine the obtainable molecular weight, of the copolymer of the invention. In general it can be said that with a lower concentration of I, a higher molecular weight can be obtained. In this application the molecular weight is the weight average molecular weight. The molecular weight is also strongly determined by the temperature of the process and to a minor extent by the solvent and solvent concentration. This holds for the suspension as well as for the solution process.

The reaction mixture is internally circulated. Generally the process will be conducted in such a way that the circulation time is between 0.1 and 10 minutes. Herewith reasonable reaction times are obtained for the process of the invention. To enable shorter times than 0.1 minute higher reactor temperatures should be maintained for a given conversion, with consequently an additional risk of degradation reactions occurring. Longer times than 10 minutes may cause inefficient use of the process equipment especially when several circulations are applied in the process. In the case that the loop reactor comprises two jacketed reactors in a loop, the circulation time is the volume of the jacketed reactors devided by the flow rate per unit of time in the loop. This can easily be measured by e.g. putting a flow meter in the tube which connects the first and the second jacketed reactor. In the case of a tank reactor with internal draft tube and helicon mixer, the internal circulation can be calculated on the basis of the pumping capacity of the helicon mixer, which depends upon e.g. on the speed of revolution of the helicon mixer and the pitch of the helicon mixer. The calculation of the circulation time of a stirred tank reactor with an internal draft tube and helix type mixer is described in detail in US 3,392,963.

In the case that the process of the invention is conducted as a solution process, the feed flow to the loop reactor further comprises a solvent or a solvent mixture. The solvent or solvent mixture is chosen in such a way that the monomers as well as the resulting copolymer of MA and AVE dissolve in it. The amount of the solvent or solvent mixture in the reactor flow is generally chosen between 30 and 65 wt%, based on the total weight of the reactor contents. At amounts of less than 30 wt.% the viscosity of the solution will increase making handling in the process more difficult, whilst at amounts of solvent above 65 wt% the resulting copolymer is strongly diluted and large amounts of solvent have to be disposed of. Suitable solvents for solution polymerization according to the invention include acetone and methyl ethyl ketone.

In the case that the process of the invention is conducted as a suspension process additional, compared to the amount needed for producing the copolymer, AVE or a diluent is used to dilute the reaction mixture. The resulting copolymer of MA and AVE does not dissolve in the AVE or the diluent and thereby forms a solid and thus a suspension is obtained. The solid content, comprising at least the copolymer, of the reaction mixture is generally between 10 and 35 wt%. At solid contents below 10 wt% the process will become less efficient while at solid contents above 35 wt% the transport of the suspension in the process will become more difficult. Suitable diluents for the suspension copolymerization according to the invention include benzene, toluene, ethyl benzene, xylene, heptane, cyclohexane, hexane, diisopropyl ether, tert-butyl methyl ether, dibutyl ether, methyl isobutyl ketone, methyl amyl ketone, methyl isoamyl ketone and mixtures thereof. For rendering the produced copolymer suitable for e.g. use on the human body, preferably aliphatic non-toxic diluents such as heptane, cyclohexane, diisopropyl ether, tert.-butyl methyl ether, dibutyl ether, methyl isobutyl ketone, methyl amyl ketone, methyl isoamyl ketone and mixtures thereof are used. More preferably these aliphatic non-toxic diluents are used in combination with a molar ratio of AVE to MA of higher than 2 in order to keep the level of unreacted MA in the resulting copolymer low. Preferably AVE is used instead of an additional diluent to dilute the monomer flow. This limits the number of process flows to be controlled.

Another advantage of the process of the invention is that lower initiator concentrations than so far used in a batch process can be employed, which is particularly advantageous for obtaining higher molecular weight copolymers of MA and AVE.

The molecular weight of the copolymer obtained by the process according to the invention is generally between 50,000 and 2,000,000 g/mol. Copolymers with lower molecular weights than 50,000 g/mol as well as copolymers with molecular weights higher than 2,000,000 g/mol are so far of only limited commercial importance.

Through a suspension process copolymers with various molecular weights can be produced, however this process is preferably used for producing copolymers with a high molecular weight, between 500,000 and 2,000,000 g/mol. Copolymers with molecular weights of less than 500,000 g/mol can also be produced through a solution process, in which case the molecular weight is preferably between 100,000 and 500,000 g/mol. A molecular weight larger than 500,000 g/mol is generally too viscous for a solution process.

Yet another advantage of the process of the present invention is that copolymers with a narrower molecular weight distribution can be obtained than in the known batch processes. The molecular weight distribution, Mw/Mn, is the ratio of the weight average molecular weight Mw, to the number average molecular weight Mn. The molecular weight of the copolymer of the invention can be controlled by using the internal circulation of the reaction mixture. The flow rate per unit of time of the internal circulation is defined as the internal circulation F_{ic}.Particularly, the molecular weight distribution of the copolymer of MA and AVE can be controlled using the ratio of the internal circulation F_{ic} to the feed flow F_{f}, both expressed as volume per unit of time. F_{ic}/F_{f} is in this application also referred to as the circulation ratio.

The circulation ratio F_{ic}/F_{f} can be easily determined. The feed flow F_{f} is defined as the volume per unit of time of MA, AVE, I and optionally solvent or diluent added to the reactor through the inlet. The internal circulation F_{ic} depends on the reactor type. In the case of a loop reactor comprising two separate jacketed reactors, subsequently connected in a loop, the internal circulation is the flow rate in the loop. In the case of a tank reactor with internal draft tube and helicon mixer, the internal circulation can be calculated through the pumping capacity of the helicon mixer, which depends e.g. on the speed of revolution of the helicon mixer and the pitch of the helicon mixer. The calculation of both F_{ic} and circulation time is described in detail in US 3,392,963.

Preferably the circulation ratio is at least 15. Herewith a molecular weight distribution of the resulting copolymer of less than 2.3 can be obtained. An other advantage of a circulation ratio of at least 15 is that the risk of a runaway reaction is further reduced. More preferably the circulation ratio is higher than 50. This results in a copolymer of MA and EVA with a molecular weight distribution of less than 2. Most preferably the circulation ratio is between 100 and 300. This results in a copolymer of MA and AVE, with a molecular weight distribution of less than 1.9.

In the process of the invention a part of the reaction mixture leaves the loop reactor. In the reaction mixture still a remainder of initiator is present. Preferably this remainder is less than 20 mol% and more preferably less than mol10%. This prevents unwanted side reactions in the post reactor. Furthermore the reaction mixture leaving the loop reactor still contains unreacted MA. For some applications of the copolymer according to the invention, e.g. as personal care products, a low level of MA is preferred. This low level of MA is preferably less than 10 parts per million, ppm, and more preferable less than 5 ppm. Most preferred is an MA content of less than 1 ppm based on the weight of the total composition, e.g. in those cases where the copolymer may come into direct contact with the human skin. This level can be reached with the process according to the invention wherein the part of the reaction mixture, which has left the loop reactor, is subsequently heated to a temperature between 120 and 220 °C, for a time sufficient to reduce the free MA content to below 10 parts per million, based on the total weight of the reaction mixture. The time necessary for this treatment depends on the desired level of MA remaining in the copolymer and can easily be determined by the one skilled in the art.

The remainder of I in the total of the reaction mixture is determined by the average total residence time of the reaction mixture in the loop reactor. The average total residence time in the loop reactor is the volume of the loop reactor divided by the feed flow, expressed in volume per unit of time. Furthermore the remainder of I is determined by its chemical reactivity, expressed as its half-life time, and the temperature at which the process of the invention is conducted. Half-life time of an initiator in relation to temperature is normally available through the supplier.

Depending on the chosen type of the process of the invention the copolymer still is in a suspension or in a solution after passing the post reactor. The suspension and if desired even the solution can be transformed into a powder using the generally known techniques, such as a centrifuge and a dryer, flash vessels and extruders. With these techniques the solvent, diluent or excess AVE is separated from the copolymer of MA and AVE.

The separated solvent, solvent mixture or diluent or excess AVE can be re-used in the process directly or after a purification and separation step. Generally known techniques such as distillation, cyclones and filters can be applied.

Surprisingly it has been found that the copolymer of MA and AVE with a molecular weight distribution of less than 2.0 can be used for glueing of human bones.

The present invention therefore also relates to a copolymer of MA and AVE characterized in that the molecular weight distribution, expressed as Mw/Mn, is less than 2.0 and preferably less than 1.9.

The copolymer of MA and AVE can however also be used for other applications than glueing of human bones, e.g. the copolymer of MA and AVE is often applied in hygiene and personal care products as well as in surgery products, examples of applications being toothpastes, hair fixatives and glues. For many applications, the copolymers should be soluble in water.

The copolymers produced in the process according to the invention can also be further modified in either a continuous or a batch wise manner. For instance, the anhydride groups contained in the polymer can be hydrolyzed with water to yield carboxylic acid groups. These hydrolyzed copolymers are used in toothpaste and mouth-washes, or in adhesives. Alternatively, it is known that hydrolysis of the polymer can be effected by a caustic aqueous solution to yield alkali or earth-alkali salts of the carboxylic acid groups containing copolymers.

Preferably the hydrolyzed copolymers are made from copolymer produced according to the invention in a solution polymerization process. The advantage hereof is that the copolymer solution as obtained can be applied directly for further modification. More preferably the hydrolyzed copolymers are made in a continuous way by contacting the copolymers with water in a high-shear mixing device and subsequently removing the solvent or solvent mixture by distillation.

Another known modification of the copolymers is by alcoholysis. In this reaction the anhydride groups contained in the copolymer are reacted with lower alkyl alcohols. Suitable examples of lower alkyl alcohols are C₁-C₄ alcohols. The alcohol-anhydride reaction is a fast reaction which gives one ester group and one carboxylic acid group per reacted anhydride group. The alcohol can also react with the formed carboxylic acid, but this reaction is slower. Alcoholized copolymers of maleic anhydride and alkyl vinyl ether are used e.g. as hair fixatives. If ethanol is chosen as the lower alkyl alcohol, the modified polymer is usually left dissolved in ethanol with a solid content of about 50 wt.%. If propanol or butanol is chosen as the lower alkyl alcohol, the excess of alcohol is usually first distilled from the modified polymer, and the modified polymer is again dissolved in ethanol to give a polymer solution with a solid content of about 50 wt.%.

In view of the above, the invention also relates to hydrolyzed or alcoholyzed copolymers of MA and AVE, characterized in that the molecular weight distribution, as expressed as Mw/Mn, is less than 2.0.

Furthermore the invention also relates to an apparatus to carry out the process of the present invention. With the apparatus of the invention the process can be carried out in a continuous manner. Until today the process of the invention only has been carried out only in a batchwise or semi-batchwise manner.

A further object of the invention is to provide an apparatus for conducting the process of the invention.

This object is achieved through an apparatus for conducting the process of the invention, which comprises a loop reactor, which is connected through a tube to a post reactor, the post reactor being constructed in such a way that plug flow is obtained.

With the apparatus of the invention the amount of unreacted MA in the reaction mixture can be reduced. The apparatus of the invention is specially suited for reduction of the level of unreacted MA of less than 10 parts per million, ppm, based on the total weight of the reaction mixture. Furthermore it has been found that the apparatus of the invention is also very suitable for reducing the amount of unreacted MA in other types of copolymerizations. Moreover the apparatus of the invention has been found to reduce the amount of unreacted monomers in copolymerizations.

In the post reactor plug flow is generally obtained by designing this post reactor for laminar flow and incorporating static mixing elements in said reactor. Several static mixing elements can be used, an example being a Sulzer SMXL® element.

Preferably the loop reactor comprises a stirred tank reactor, which is fitted with, a draft tube and a helicon mixer in an annular part and an optional pitch bladed or MIG mixer. In this way a loop reactor with a compact design is obtained, which requires little room in a plant. An added advantage is that this reactor is very suitable for mixing a very viscous solution or suspension, which is obtained with reaction mixtures comprising copolymers with high molecular weights.

A stirred tank reactor with an internal draft tube and helix type mixer is described in US 3,392,963. In this publication a stirred tank reactor is described which is furthermore fitted with two pitch bladed mixers in the center of the reactor with two separated feed points. This reactor relates to the preparation of EPDM rubbers, much attention being paid to the fact that the reactants are fed separately. It is not suggested that such a reactor is suitable for the copolymerization of MA and AVE. Moreover if this reactor would be used for the copolymerization of MA and AVE, the level of unreacted MA would be too high resulting in an unsuitable copolymer of MA and AVE.

The invention will be elucidated by the following, non limiting, drawings.

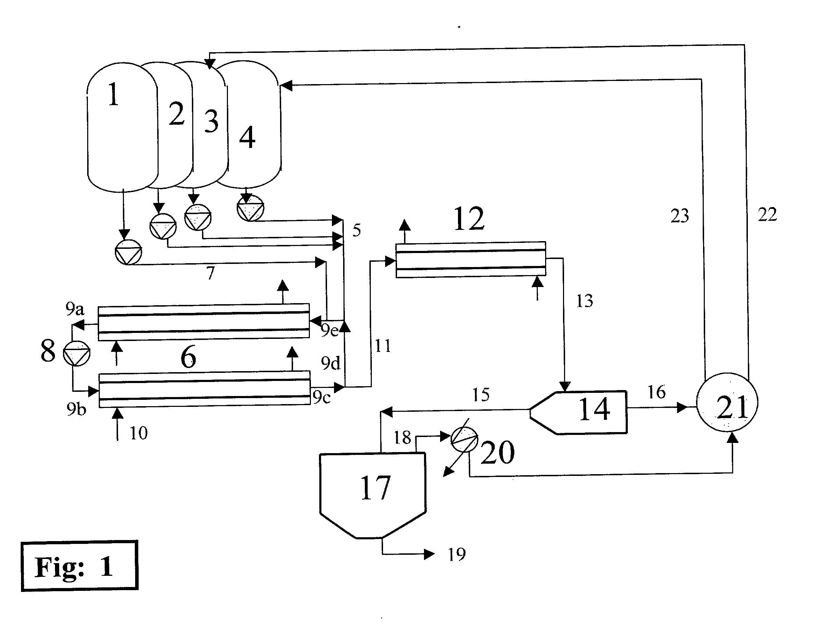

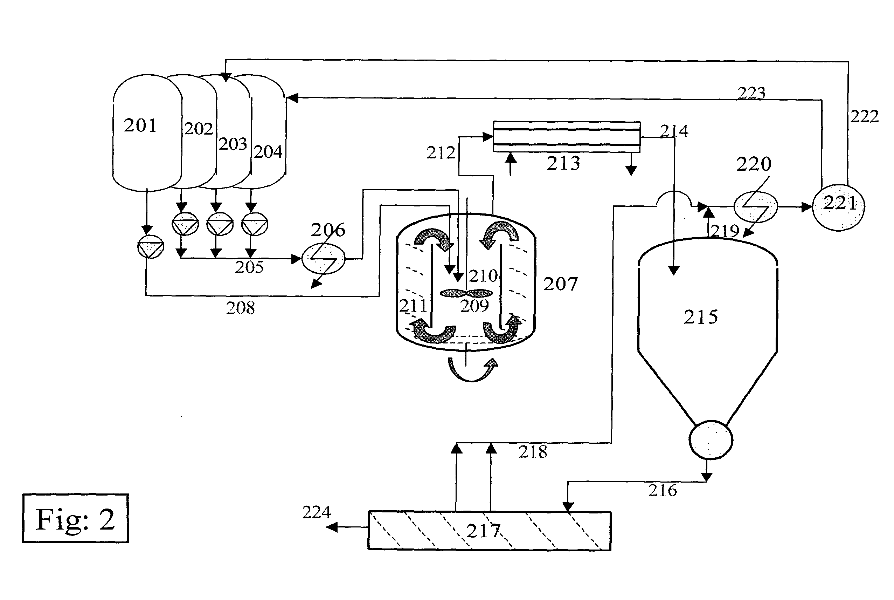

In these drawings Fig. 1. gives an example of a schematical layout of a first embodiment of an apparatus to conduct the process of the invention for preparing a copolymer of maleic anhydride and a alkyl vinyl ether, comprising a loop reactor with two separate jacketed reactors and a circulation pump and a post reactor after which the layout of a process for a suspension process is shown; and Fig. 2. gives an example of a schematical layout of a second embodiment of an apparatus to conduct the process of the invention for preparing a copolymer of maleic anhydride and a alkyl vinyl ether, comprising a loop reactor in the form of a stirred tank reactor fitted with a draft tube and in the annular part a helicon mixer and a post reactor after which the layout of a process for a solution process is shown.

In Fig. 1., 1 is a storage tank for MA, 2 is a storage tank for I, 3 is a storage tank for AVE and 4 is a storage tank for an optional solvent or diluent . The storage tanks 2, 3 and 4 are connected through a tube 5 to a loop reactor 6. Storage tank 1 is connected through a tube 7 to the loop reactor 6. The loop reactor comprises two separate jacketed reactors fitted in a circulation loop 9, comprising tubes 9a-9e. In this circulation loop the exit of a first jacketed reactor is fitted with a tube 9a to a pump 8 which is connected to the inlet of a second jacketed reactor with tube 9b. The exit of the second jacketed reactor is connected to the inlet of the first reactor with tubes 9c, 9d and 9e. Furthermore the circulation loop contains a branch between tubes 9c and 9d from which tube 11 leaves to a post reactor 12 and contains a second branch between tubes 9d and 9e to which tubes 5 and 7 are connected. The post reactor is fitted with a heating device and is fitted through a tube 13 to the purification or separation part of the process. The purification part starts with a centrifuge 14. The centrifuge 14 is connected with tube 15 to a dryer 17. Furthermore the centrifuge 14 is fitted through a tube 16 to a separation unit 21, which is fitted with a tube 22 to storage tank 3 and with tube 23 to storage tank 4. Dryer 17 is fitted through a tube 18 and a condenser 20, to the separation unit 21. Finally the drier is fitted with a tube 19 from which dried copolymer of MA and AVE according to the invention is obtained.

In Fig. 2., 201 is a storage tank for MA, 202 is a storage tank for I, 203 is a storage tank for AVE and 204 is a storage tank for an optional solvent or diluent. The storage tanks 201, 202, 203 and 204 are connected through tube 205 comprising a cooler 206 to a stirred tank reactor 207. The storage tank for MA is connected with a tube 208 to the stirred tank reactor 207. The stirred tank reactor is fitted with an optional pitch bladed or MIG mixer 209, a draft tube 210 and a helicon mixer 211 in an annular part. A tube 212 is leaving the reactor and forms an input to a post reactor 213 which can be heated. A tube 214 is leaving the post reactor 213 to the purification or separation part of the process. The purification part starts with a flasher 215 of which a tube 216, which contains a flow of a concentrated solution, is leaving to an extruder 217. A tube 218, through which off gasses from the extruder flow, and a tube 219, through which off gasses from the flasher 215 flow, are led to a condenser 220, after which a separation unit 221 is placed. From the separation unit a tube 222 is returned to storage tank 203 and a tube 223 which is returned to the storage tank 204. Finally a tube 224 is leaving the extruder from which the copolymer of MA and AVE according to the invention is obtained.

## Claims

1. Process for the preparation of a copolymer of maleic anhydride and an alkyl vinyl ether, comprising the steps of supplying maleic anhydride and the alkyl vinyl ether and an initiator, together forming a feed flow, through an inlet to a reactor wherein maleic anhydride and the alkyl vinyl ether react to a copolymer of maleic anhydride an alkyl vinyl ether which forms a reaction mixture with the maleic anhydride, the alkyl vinyl ether and the initiator, **characterized in that** the process is a continuous process and the reactor is a loop reactor wherein the reaction mixture is internally circulated, whereby this reaction mixture arrives again at the inlet before the maleic anhydride and alkyl vinyl ether have completely reacted and while a remainder of initiator is still present.

2. The process of claim 1, wherein the feed flow to the loop reactor further comprises a diluent, a diluent mixture a solvent or a solvent mixture.

3. Process according to any one of claims 1-2, wherein the feed flow comprises a molar ratio of maleic anhydride to initiator of between 100 and 10 000

4. Process according to any one of claims 1-3, wherein the feed flow comprises a molar ratio of alkyl vinyl ether to maleic anhydride of between 1.05 and 5

5. Process according to any one of claims 1-4, wherein the alkyl vinyl ether is a C1-C4 alkyl vinyl ether.

6. Process according to any one of claims 1-5, wherein the process is carried out at a temperature between 50 °C and 180°C

7. Process according to any one of claims 1-6, wherein the ratio of an internal circulation to the feed flow is at least 15.

8. Process according to any one of claims 1-7, wherein a part of the reaction mixture is subsequently heated to a temperature between 120 and 220 °C, for a time sufficient to reduce the free MA content to below 10 parts per million, based on the total weight of the reaction mixture.

9. Copolymer of maleic anhydride and alkyl vinyl ether, **characterized in that** a molecular weight distribution, expressed as Mw/Mn, is less than 2.0.

10. Hydrolyzed or alcoholized copolymer of maleic anhydride and alkyl vinyl ether, **characterized in that** the molecular weight distribution, expressed as Mw/Mn, is less than 2.0

11. Apparatus for conducting the process of any one of the claims 1-8, which comprises a loop reactor (6, 207), which is connected through a tube (11, 212) to a post reactor (12, 213), the post reactor being constructed in such a way that plug flow can be obtained.

12. Apparatus for conducting the process of any one of claims 9, the loop reactor comprising a stirred tank reactor (207) which is fitted with an optional pitch bladed or MIG mixer (209), a draft tube (210) and a helicon mixer (211) in an annular part.
